# EUROPEAN PATENT SPECIFICATION

(11) **EP 2 123 797 B1**
(45) Date of publication and mention of the grant of the patent: **12.08.2015**
(21) Application number: 08425299.8
(22) Date of filing: 29.04.2008
(51) Int. Cl.: C25C 5/02

(54) **Nanomaterials for controlled metal release and process for their production**
Nanomaterialien für die gesteuerte Metallfreisetzung und Verfahren zu ihrer Herstellung
Nanomatériaux pour libération contrôlée de métal et leur procédé de fabrication

(43) Date of publication of application: 25.11.2009
(73) Proprietor: Universita' Degli Studi di Bari, 70121 Bari (IT)
(72) Inventor: Cioffi, Nicola, c/o Dipartimento di Chimica, 70126 Bari (IT); Ditaranto, Nicoletta, c/o Dipartimento di Chimica, 70126 Bari (IT); Sabbatini, Luigia, c/o Dipartimento di Chimica, 70126 Bari (IT); Torsi, Luisa, c/o Dipartimento di Chimica, 70126 Bari (IT); Zambonin, P. Giorgio, c/o Dipartimento di Chimica, 70126 Bari (IT)
(74) Representative: Gislon, Gabriele

(56) References cited:
- US-A- 5 620 584
- US-A1- 2004 108 220
- US-A1- 2007 284 261
- US-B1- 6 224 739
- N. CIOFFI ET AL: "Copper Nanoparticle/Polymer Composites with Antifungal and Bacteriostatic Properties" CHEMISTRY OF MATERIALS, vol. 17, 21 September 2005 (2005-09-21), pages 5255-5262, XP002498498
- CIOFFI N ET AL: "Synthesis, analytical characterization and bioactivity of Ag and Cu nanoparticles embedded in poly-vinyl-methyl-ketone films" ANALYTICAL AND BIOANALYTICAL CHEMISTRY, SPRINGER, BERLIN, DE, vol. 382, no. 8, 1 August 2005 (2005-08-01), pages 1912-1918, XP019327550 ISSN: 1618-2650
- CIOFFI NICOLA ET AL: "Antifungal activity of polymer-based copper nanocomposite coatings" APPLIED PHYSICS LETTERS, AIP, AMERICAN INSTITUTE OF PHYSICS, MELVILLE, NY, vol. 85, no. 12, 1 January 2004 (2004-01-01), pages 2417-2419, XP012062659 ISSN: 0003-6951
- N. CIOFFI ET AL: "Synthesis, analytical characterization and bio-activity of silver and copper-containing nano-structured membranes" J. APPLIED BIOMATERIALS & BIOMECHANICS, vol. 2, 2004, page 200, XP002498499
- H. BÖNNEMANN, R.M. RICHARDS: "Nanoscopic Metal Particles- Synthetic Methods and Potential Applications" EUROPEAN JOURNAL OF INORGANIC CHEMISTRY, 17 August 2001 (2001-08-17), pages 2455-2480, XP002498500

## Description

The present invention relates to nanomaterials with controlled release of metals and to the process for the preparation thereof. More in particular, the present invention relates to "core and shell" type nanoparticles, i.e. having a core and a shell that encloses said core, wherein the core is a metal having biocide action and the shell is obtained with a surfactant.

Core/shell nanoparticles of the type discussed above are known in the art. US5620584 describes a process for producing nanoparticles with dimensions below 30 nm having a metal core, in particular noble metal such as Pt and Pd, to be used as catalysts.

US 2007/0284261 discloses the preparation of silver triangular pyramid particles by means of depositing said particles onto a growth substrate. An electrolytic solution containing silver ions and at least one surfactant and a solvent is fed to a reaction vessel containing an electrolytic solution layer. The silver ions dissolved in the electrolytic solution are reduced by applying a voltage to said electrolytic solution layer and silver triangular pyramid particles are deposited onto a substrate. The surfactant has an alkyl main chain in the molecule, which comprises 1 to 20 carbon atoms (more preferably 4 to 16 carbon atoms).

The use of nanoparticles obtained electrochemically as in the patent cited above and having a Cu or Ag core for use as biocide is known in the art, for example from the following publications:
*1.* N. Cioffi, et al., Chemistry of Materials, 17, 2005, 5255-5262
*2*. N. Cioffi, et al., Analytical and Bioanalytical Chemistry, 382, 2005, 1912-1918*.*
*3.* N. Cioffi, et al., Applied Physics Letters, 85 (12), 2004, 2417-2419.
*4*. N. Cioffi, et al., Journal of Applied Biomaterials and Biomechanics, 2, 2004, 200*.*

These publications describe the biocide activity, or bioactivity, of nanoparticles with Cu or Ag core and shell obtained with a surfactant chosen from tetraoctylammonium chloride and tetrabutylammonium perchlorate. The structure of the nanoparticles is similar to that produced in the case of inverse micelles, with polar heads of the surfactant molecules located in proximity of the metal core and the lipophilic tails oriented outward. According to said publications, the nanoparticles are used to form nanocomposite materials, for this purpose they are embedded in polymer matrices which, when exposed to aqueous solutions, release ion species, in quantities and according to kinetic processes correlated to the quantity of nanoparticles present in the material and to the type of polymer used for the matrices. In particular, it is described how the concentration of metal released in solution increases as a function of the contact time and reaches a plateau value, which increases in amount as the concentration of nanoparticles in the nanocomposite coating increases. Specifically, a linear relation is observed between percentage of metal embedded in the coating and average release values measured upon reaching the plateau.

Said publications also describe the trend of the release of metal ions from nanocomposite materials in experiments in which the solution together with the ions released therein is completely removed and replaced with a new solution every 24 hours. The experiments had an overall duration of 10 days and were implemented using composite nanomaterials containing nanoparticles dispersed in three different polymer matrices, i.e. polyvinyl methyl ketone, polyvinyl chloride and polyvinylidene fluoride. In all cases a decrease of the quantity of metal ions released in the first three/four days was recorded, with subsequent stabilization at a plateau value. This value nonetheless represents a concentration of ions in solution sufficient to guarantee bioactivity of the nanocomposite materials.

Copper and silver nanoparticles (NP), and also tin and zinc ones, and the nanomaterials in which they are contained, can be profitably employed to inhibit the growth of various microorganisms. In general terms, all those organisms whose life cycle is influenced by these metals are potential objectives for the NP described here. The uses for these materials are multiple: for example, food containers or food contacting surfaces, biomedical devices and medical products such as toothbrushes, gauze, sterile equipment, antibacterial clothing (underwear, sports and professional garments), both of the disposable type (scrubs (operating room gowns), sheets, various hospital products) and for repeated use (coated, composite, synthetic fabrics); paints and coatings with additives with anti-mildew and/or anti-bacterial properties.

In general, all sectors interested in reducing biological risks, including related activities involving large numbers of users or the presence of foods, humidity or other factors in which pathogens develop (airports, stations, hospitals, farms, canning and food industries etc.) can benefit from the development of technologies with high efficacy.

However, the applications discussed above are greatly limited by problems related to the release times of metal ions into the environment, when in contact with aqueous materials. Control of the quantity of nanoparticles present in the final product alone is not sufficient, as it acts on the quantity released and not on the release speed. Moreover, on the basis of what has been published to date in the literature, if one wishes to increase the quantity of bioactive species released, this is only possible through increasing the concentration of Cu NPs employed in the formulation.

The use of different polymer matrices in which to disperse the nanoparticles does not allow an effective solution to the problems mentioned above; moreover, the type of matrix is not always suitable for the use required: for example, a PVC matrix is not normally suitable for food use. Currently, thin layers of metal (but not nanoparticles) are employed in devices such as toothbrush heads, platings for biomedical devices, etc., which imply a greater use of metal than is required in the case in which nanoparticles of equal surface area are used. Moreover, thin layers are difficult to use in many fields such as fabrics, paints, etc..

There is therefore the need to be able to control, i.e. modulate through further parameters, in quantitative and/or kinetic terms, the release of metal ions from the nanoparticles in aqueous and non aqueous solutions with which they come into contact.

The object of the present invention is to solve this problem in a simple, reliable, effective and inexpensive manner, so as to allow the use of nanoparticles to inhibit bacterial contamination in sectors such as: biomedical, textile, packaging, space exploration, paints and coatings, etc..

This object is achieved by the present invention, which refers to a use of nanoparticles according to claim 1.

The invention also provides a nanoparticles composition according to claim 4 and a process for control of metal ion release from nanoparticles, characterized according to claim 6.

A further object of the invention are the nanocomposite materials incorporating the nanoparticles and the nanoparticles according to claim 9. The nanoparticles of the invention are of the core/shell type; the core is composed of metals such as Cu, Ag, Sn, Zn, etc.; the average dimensions of cores are in the order of a few nanometers, typically 4-10 nm; the state of oxidation is initially zero. Storage in air causes the core to convert into the corresponding oxide without altering the properties of interest for the application.

The nanoparticle shell is made of a monolayer of cationic surfactants such as quaternary ammonium salts with symmetrical structure, or in any case with alkyl chains R defined as above.

The invention derives from the surprising finding that for nanoparticles having the formula

(Me)ₘ(NR₄⁺X⁻)ₙ (1)

wherein (Me) is the core formed from a metal chosen from Ag, Cu, Sn and Zn; (NR₄⁺X⁻) is the shell made of a surfactant in the form of tetra-alkyl-ammonium salt, where X is chosen from Cl, Br and I, and NR₄⁺ is a compound wherein R is an alkyl chain of a length from 4 to 12 units of carbon (C₄-C₁₂), there exists a correlation between the length of the alkyl chain R and the release time of the ion species from the core through the shell.

In other words, it was surprisingly found that it is possible to delay the release of the metal from the core to an aqueous solution or to other aqueous material or material suitable to receive ions, by lengthening the alkyl chain of the tails of the surfactant molecules of the nanoparticles, starting from a minimum of 4 carbon atoms up to a maximum of 12 carbon atoms.

The invention has the advantage that materials with predefined release properties can be obtained and, consequently, bioactivity can be controlled.

In fact, the invention allows the use of an additional operating parameter (the fine structure of the nanoparticle) to control the concentration of metal ions released and consequent bioactivity, so as to operate in conditions of toxicity for target organisms (pathogens, contaminants, undesirables, etc.) without causing damages for other living beings. It is fundamental to note that this takes place notwithstanding the choice of the metal charge nano-dispersed in the coating.

Both the speed and the amount of release can be controlled by varying the length of the alkyl chains that stabilize the nanoparticle.

The kinetic constants of the materials based on surfactants with longer chain are in fact considerably lower with respect to homologous materials based on short alkyl chains, showing that ion species released by the core have greater difficulty in crossing a thick lipophilic layer. The use of surfactants with different length of the alkyl chains thus allows the preparation of nanomaterials in which the stabilizing layer has variable thickness and hydrophilic/lipophilic levels.

A further advantage is that the nanoparticles of the invention can be used as is, i.e. without requiring to be inserted or embedded in polymer matrices. This fact allows their use for example to impregnate for fabrics or other porous/fibrous matrices. These and other advantages will be evident from the following description of the invention and from the following non-limiting illustrative examples.

As mentioned above, an object of the invention are nanoparticles having general formula

(Me)(NR₄⁺X⁻) (1)

wherein (Me) is the core formed from a metal chosen from Ag, Cu, Sn and Zn; (NR₄⁺X⁻) is the shell, where X is chosen from Cl, Br and I; where NR₄⁺ is a compound where R is an alkyl chain long from 4 to 12 units of carbon (C₄-C₁₂); with the exclusion of compounds in which Me is Ag or Cu, X is Cl or Br and R is a chain C₈.

Preferably the metals are selected from Cu and Ag and the anions are selected from Chloride and Bromide. In particular, nanoparticles of formula (1) are preferred, in which Me is Cu and X is Cl, and those in which Me is Ag and X is Br.

As can be seen from the formula, the four alkyl chains R are identical, i.e. the surfactant is "symmetrical". In the synthesis of the nanoparticles of the invention, all chains between C₄ and C₁₂ including butyl and dodecyl can be used, and linear chains are preferably used. Speed and amount of metal release can be controlled changing even only the length of the alkyl chains R which stabilize the nanoparticle.

The following table shows the concentration values of copper released after 4 hours in an aqueous solution with physiological composition, by a composite nanomaterial composed of copper nanoparticles dispersed in a polymer matrix, polyvinyl methyl ketone. The release conditions are the following: the nanocomposite coatings are placed in contact with said aqueous solution with physiological composition; subsequently, atomic absorption spectrophotometry is used to measure aliquots of this solution collected for each of the samples at specific time intervals, in order to determine the quantity of metal ions released and the kinetic of this release. Table 1 shows some of the results obtained.

**Table 1: concentrations of copper and kinetic constants relative to ion release by composite nanomaterials at different percentages in weight of nanoparticles.**

| *Cu*/*Polymer* %_{*m*/*m*} | *Cu*/*C₄*/*pol* | | *Cu*/*C₁₂*/*Pol* | |
|---|---|---|---|---|
| | k [h⁻¹] | Plateau [ppb] | k [h⁻¹] | Plateau [ppb] |
| *5* | 9.0 | 2600 | 5.3 | 150 |
| *3.5* | 11.2 | 1700 | 4.6 | 100 |
| *2* | 15.4 | 1000 | 3.3 | 30 |
| *0.5* | 13.1 | 300 | 4.0 | 20 |

In view of the prior art mentioned above, nanoparticles in which Me is Ag or Cu, X is Cl or Br and R is a chain C₈ are excluded from the protection as product *per se.*

This exclusion is not valid for mixed compositions of nanoparticles formed by nanoparticles with alkyl tails R differing from particle to particle. For example, compositions according to the invention are obtained by separately preparing nanoparticles with different tails: C₄, C₆, C₈ and C₁₂ and then mixing them in quantities calculated to obtain the desired concentration of ions released in time. This concentration can for example be maintained constant in view of an ion consumption, or of the need to implement a precise ion release that is correlatable to specific biological effects in relation to target organisms (pathogens, contaminants, etc.).

Preferably, compositions comprise nanoparticles all having the same type of core, i.e. a core with the same metal, preferably Cu or Ag.

Nanoparticle synthesis takes place electrochemically in the same way as known in the literature. An example of synthesis is given below.

### Example 1 - synthesis of copper nanoparticles with the sacrificial anode technique.

*Synthesis is conducted in a conventional cell with three electrodes: the working electrode is composed of a copper plate and the counter electrode of a platinum plate: both 0.5 mm thick and with an area of 2.5 cm², for a total solution volume of 10 mL; the reference electrode is an Ag*/*AgNO₃ 0.1 M in acetonitrile produced in the laboratory. The electrosynthesis solution contains the compound of formula NR₄⁺ dissolved in a mixture of acetonitrile (ACN) and tetrahydrofurane (THF) in proportion of 1:3.*

*As element of novelty with respect to what is known in the literature it is specified that for synthesis of the NPs of this invention, the preparation is carried out for a time within the range at 3 to 12 hours. In the latter case, longer operating times require replenishment of the electrolyte concentrations.*

### Example 2. Modification of aerospace materials with PVMK/Cu layers.

*By way of example of possible applications, nanocomposites based on copper nanoparticles (NPs) were deposited by spin coating on materials for use in the space field.*

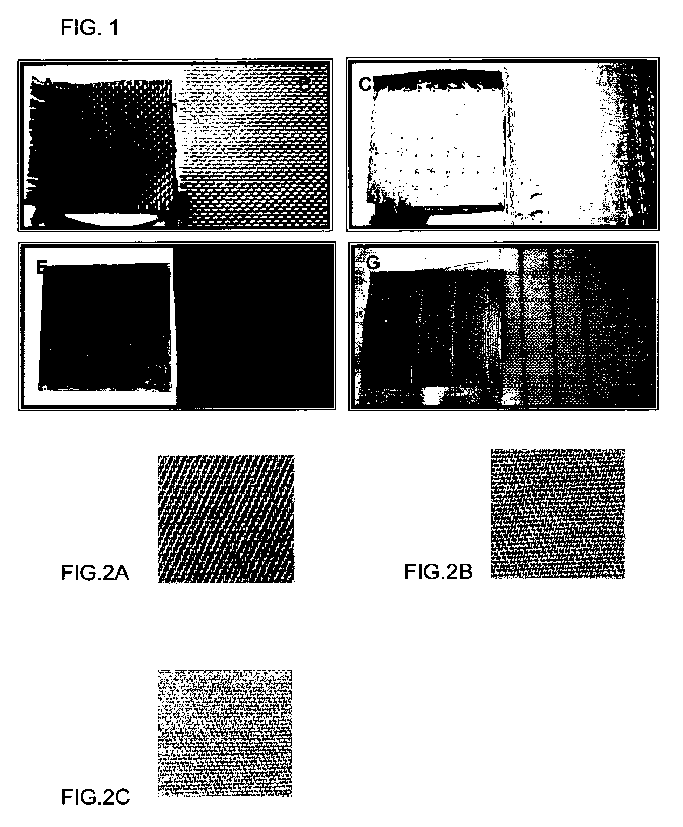

*Figure 1* *shows some photographs that compare non modified materials used in the aerospace field with those subjected to treatment with Cu NPs.*

*Top left shows samples of "Kevlar" treated A and untreated B; top right shows samples of "Nomex A", in which C indicates the treated material and D the uncoated sample; bottom left shows samples of "Kapton" where E is the treated material and F is the untreated sample; bottom right shows samples of "Nomex B", where G is coated and H is uncoated.*

*Spin coating is a technique known in the art for preparing thin films (from 100 nm to 5 microns). In the present example, the film is prepared directly on the substrate, i.e*. *on the fabrics or sheets of material.*

### Example 3. Modification of textile products with copper nanoparticles.

*In the case of fabrics in cotton or with mixed or synthetic composition, it was surprisingly found that the nanoparticles are easily absorbed and retained by the textile fibers, and that therefore deposition can be effected even by simple immersion*/*impregnation.*

*Figures 2A-2C* *show the results of an embodiment of antimicrobial textile products. Samples of a same fabric with mixed composition have been impregnated with different concentrations of Cu NPs:* *Fig. 2C* *shows the fabric treated with a bath of greater dilution, corresponding to a surface concentration of copper on the treated fabric equal to 0.2 atomic%;* *Fig. 2B* *shows the fabric treated with a bath of intermediate dilution, corresponding to a surface concentration of copper equal to 0.4 atomic%;* *Fig. 2A* *shows the fabric treated with a bath of lesser dilution, corresponding to a surface concentration of copper equal to 1.6 atomic%.*

*In the case in which simple impregnation by immersion is used, it is possible to reuse the same treatment bath several times, without determining an appreciable variation of the concentration of copper retained on the surface, or of that released in solution.*

*Fabrics modified with the nanomaterial are in fact capable of releasing metal ions in aqueous solutions at physiological concentration in quantities that are directly correlated to the amount of copper present on the surface of the fabric: in all cases, a higher average release value at plateau is recorded in cases of fabrics impregnated with nanomaterial with higher copper concentrate.*

The stability of materials with respect to storage in air was evaluated experimentally by storing them in air, at ambient temperature, for four months, finding that there is no noteworthy deterioration in the release properties of the nanoparticles.

By way of example, the case of copper is described. It is known, as already hypothesized in publication 1, that ion release by (Cu) (NR₄X) involves oxidation of the metal core and subsequent transfer of copper ions, which must migrate through the organic shell before passing to the phase in which they implement the biocide/biostatic action. Nano-Cu⁽⁰⁾→Cu^{(II)} oxidation is a relatively fast process that does not significantly influence the overall ion release speed, which involves at least another step, i.e. migration through the organic shell. This represents a kinetic limit for the overall ion release process (the so-called "bottleneck").

It was verified through X-ray photoelectron spectroscopy that storage in air of items modified with bioactive nanoparticles does not greatly alter the chemical composition of surfaces, but merely results in oxidation of the cores of the particles, as shown in Table 2 below.

**Table 2: atom composition of surfaces of fabrics impregnated with nanoparticles of copper, stabilized by tetraoctylammonium chloride. The error associated with the percentage indicated is equal to ±0.2% for % Cu and ±0.5% for the other elements.**

| | %**C** | %**O** | % **Cu** | % **Cl** | %**N** | %**Si** |
|---|---|---|---|---|---|---|
| **fresh** | 82.5 | 12.4 | 0.7 | 1.7 | 1.9 | 0.8 |
| **After 4 months of exposure to air** | 82.2 | 11.1 | 0.5 | 1.7 | 2.2 | 2.3 |

On the basis of the considerations in the literature and of the results of spectroscopic analysis, the following experimental evidence is understood: storage in air of items modified with nanoparticles does not significantly alter the ion release capacities.

## Claims

1. *Use of* a composition comprising two or more pluralities of nanoparticles of formula
(Me)(NRₐ⁺X⁻)ₙ (1)
wherein Me is the metal core selected from Ag, Cu, Sn and Zn; (NR₄⁺X⁻) is the shell where X is selected from Cl, Br and I, and R is an alkyl chain C₄-C₁₂, each plurality of nanoparticles having R with different length from other pluralities of nanoparticles, *to prepare nanocomposite materials having predefined release properties of metal ions and controlled bioactivity.*

2. A composition comprising two or more pluralities of nanoparticles of formula
(Me)(NR₄⁺X⁻)ₙ (1)
wherein (Me) is the metal core selected from Ag, Cu, Sn and Zn; (NR₄⁺X⁻) is the shell, where X is selected from Cl, Br and I; R is an alkyl chain C₄-C₁₂, each plurality of nanoparticles having R with different length from other pluralities of nanoparticles.

3. Nanocomposite materials comprising a polymer matrix and a composition of nanoparticles according to claim 2.

4. Nanocomposite materials comprising a fabric matrix and a composition of nanoparticles according to claim 2

5. The composition according to r claim 2, wherein Me is the same for all the nanoparticles.

6. A process *to prepare nanocomposite materials having predefined ion release properties, comprising the steps* of *electrochemically* synthesizing nanoparticles having formula
(Me)(NR₄⁺X⁻)ₙ (1)
wherein (Me) is the metal core selected from Ag, Cu, Sn and Zn; (NR₄⁺X⁻) is the shell, where X is selected from Cl, Br and I; R is an alkyl chain C₄-C₁₂, and in treating a material with said nanoparticles,
**characterized in that** *different nanoparticles with different R chains in different nanoparticles are mixed together and* the length of the alkyl chain R is chosen as a function of the release time required *to control the concentration of metal ions released and bioactivity properties*.

7. The process according to claim 6, wherein said nanoparticles all have a core obtained from the same metal.

8. The process according to claim 6 or 7, wherein said nanoparticles are embedded in a polymer matrix chosen as a function of the release time of the ions from said matrix.

9. Nanoparticles having general formula
(Me)(NR₄⁺X⁻) (1)
wherein (Me) is the metal core selected from Ag, Cu, Sn and Zn; (NR₄⁺X⁻) is the shell where X is selected from Cl, Br and I; R is an alkyl chain C₁₂.

10. Nanoparticles according to claim 9, wherein Me is Cu and X is Cl.

11. Nanoparticles according to claim 9, wherein Me is Ag and X is Br.

## Patentansprüche

1. Verwendung einer Zusammensetzung, welche zwei oder eine Vielzahl von Nanopartikeln der Formel
(Me) (NR₄⁺ X⁻)ₙ (1)
umfasst, wobei (Me) der aus Ag, Cu, Sn und Zn ausgewählte Metallkern ist; (NR₄⁺X⁻) die Hülle ist, wobei X aus Cl, Br und I ausgewählt ist, und Reine C₄-C₁₂-Alkylkette ist, wobei jede Menge der Nanopartikel ein R mit einer von den anderen Mengen von Nanopartikeln unterschiedlichen Länge aufweist, zur Herstellung von Nanokompositmaterialien, welche vordefinierte Freisetzungseigenschaften der Metallionen und eine kontrollierte Bioaktivität aufweisen.

2. Zusammensetzung, umfassend zwei oder eine Vielzahl von Nanopartikeln der Formel
(Me)(NR₄⁺X⁻)ₙ (1),
wobei (Me) der aus Ag, Cu, Sn und Zn ausgewählte Metallkern ist; (NR₄⁺ X⁻) die Hülle ist, wobei X aus Cl, Br und I ausgewählt ist; R eine C₄-C₁₂-Alkylkette ist, wobei jede Menge der Nanopartikel ein R mit einer von anderen Mengen von Nanopartikeln unterschiedlichen Länge aufweist.

3. Nanoverbundmaterialien, umfassend eine Polymermatrix und eine Zusammensetzung der Nanopartikel gemäß Anspruch 2.

4. Nanoverbundmaterialien, umfassend eine Gewebematrix und eine Zusammensetzung der Nanopartikel gemäß Anspruch 2.

5. Zusammensetzung gemäß Anspruch 2, wobei Me für alle Nanopartikel gleich ist.

6. Verfahren zur Herstellung von Nanoverbundmaterialien mit vordefinierten lonenfreisetzungseigenschaften, umfassend die Schritte des elektrochemischen Synthetisierens von Nanopartikeln der Formel
(Me) (NR₄⁺X⁻)ₙ (1),
wobei (Me) der aus Ag, Cu, Sn und Zn ausgewählte Metallkern ist; (NR₄⁺ X⁻) die Hülle ist, wobei X aus Cl, Br und I ausgewählt ist; R eine C₄-C₁₂-Alkylkette ist, und
der Behandlung eines Materials mit den Nanopartikeln,
**dadurch gekennzeichnet, dass** unterschiedliche Nanopartikel mit in verschiedenen Nanopartikeln sich unterscheidenden R-Ketten vermischt werden, und die Länge der Alkylkette R als eine Funktion der Freisetzungszeit ausgewählt wird, welche zur Steuerung der Konzentration der freigesetzten Metallionen und der Bioaktivitätseigenschaften erforderlich ist.

7. Verfahren gemäß Anspruch 6, wobei alle Nanopartikel mit einem aus dem gleichen Metall erhaltenen Kern ausgebildet sind.

8. Verfahren gemäß einem der Ansprüche 6 oder 7, wobei die Nanopartikel in eine Polymermatrix eingebettet sind, welche gemäß einer Funktion der Freisetzungszeit der Ionen aus der Matrix ausgewählt ist.

9. Nanopartikel mit der allgemeinen Formel
(Me) (NR₄⁺X⁻)ₙ (1),
wobei (Me) der aus Ag, Cu, Sn und Zn ausgewählte Metallkern ist; (NR₄⁺X⁻) die Hülle ist, wobei X aus Cl, Br und I ausgewählt ist; wobei R eine C₁₂-Alkylkette ist.

10. Nanopartikel gemäß Anspruch 9, wobei Me gleich Cu ist und X gleich Cl ist.

11. Nanopartikel gemäß Anspruch 9, wobei Me gleich Ag ist und X gleich Br ist.

## Revendications

1. Utilisation d'une composition comprenant deux ou plus de deux pluralités de nanoparticules de formule
(Me) (NR₄⁺X⁻)ₙ (1)
dans laquelle Me est le noyau métallique choisi parmi Ag, Cu, Sn et Zn ; (NR₄⁺X⁻) est la coque, où X est choisi parmi Cl, Br et I, et R est une chaîne alkyle en C₄ à C₁₂, chaque pluralité de nanoparticules contenant un R ayant une longueur différente par rapport aux autres pluralités de nanoparticules,
pour préparer des nanomatériaux composites présentant des propriétés de libération prédéfinies d'ions métalliques et une bioactivité contrôlée.

2. Composition comprenant deux ou plus de deux pluralités de nanoparticules de formule
(Me) (NR₄⁺X⁻)ₙ (1)
dans laquelle (Me) est le noyau métallique choisi parmi Ag, Cu, Sn et Zn ; (NR₄⁺X⁻) est la coque, où X est choisi parmi Cl, Br et I ; et R est une chaîne alkyle en C₄ à C₁₂, chaque pluralité de nanoparticules contenant un R ayant une longueur différente par rapport aux autres pluralités de nanoparticules.

3. Nanomatériaux composites, comprenant une matrice polymère et une composition de nanoparticules selon la revendication 2.

4. Nanomatériaux composites, comprenant une matrice de tissu et une composition de nanoparticules selon la revendication 2.

5. Composition selon la revendication 2, dans laquelle Me est identique pour toutes les nanoparticules.

6. Procédé de préparation de nanomatériaux composites présentant des propriétés de libération prédéfinies d'ions, comprenant les étapes de synthèse électrochimique de nanoparticules ayant la formule
(Me) (NR₄⁺X⁻)ₙ (1)
dans laquelle (Me) est le noyau métallique choisi parmi Ag, Cu, Sn et Zn ; (NR₄⁺X⁻) est la coque, où X est choisi parmi Cl, Br et I ; et R est une chaîne alkyle en C₄ à C₁₂, et le traitement d'un matériau avec lesdites nanoparticules,
**caractérisé en ce que** différentes nanoparticules contenant différentes chaînes R dans différentes nanoparticules sont mélangées ensemble et la longueur de la chaîne alkyle R est choisie en fonction de la durée de libération requise pour contrôler la concentration des ions métalliques libérés et les propriétés de bioactivité.

7. Procédé selon la revendication 6, dans lequel lesdites nanoparticules possèdent toutes un noyau obtenu à partir du même métal.

8. Procédé selon la revendication 6 ou 7, dans lequel lesdites nanoparticules sont incrustées dans une matrice polymère choisie en fonction de la durée de libération des ions à partir de ladite matrice.

9. Nanoparticules de formule générale
(Me) (NR₄⁺X⁻)ₙ (1)
dans laquelle (Me) est le noyau métallique choisi parmi Ag, Cu, Sn et Zn ; (NR₄⁺X⁻) est la coque, où X est choisi parmi Cl, Br et I ; et R est une chaîne alkyle en C₄ à C₁₂.

10. Nanoparticules selon la revendication 9, dans lesquelles Me est Cu et X est Cl.

11. Nanoparticules selon la revendication 9, dans lesquelles Me est Ag et X est Br.
